(19) Europäisches Patentamt
European Patent Office
Office européen des brevets

(11) Veröffentlichungsnummer: **0 351 611**
**A2**

(12) # EUROPÄISCHE PATENTANMELDUNG

(21) Anmeldenummer: **89112017.2**

(51) Int. Cl.4: **G10K 11/16**

(22) Anmeldetag: **01.07.89**

(30) Priorität: **16.07.88 DE 3824171**

(43) Veröffentlichungstag der Anmeldung:
**24.01.90 Patentblatt 90/04**

(84) Benannte Vertragsstaaten:
**AT BE CH DE ES FR GB GR IT LI LU NL SE**

(71) Anmelder: **Teroson GmbH**
**Hans-Bunte-Strasse 4**
**D-6900 Heidelberg 1(DE)**

(72) Erfinder: **Potthoff, Hans-Hermann, Dr.**
**Albert-Fritz-Strasse 45F**
**D-6900 Heidelberg-Kirchheim(DE)**
Erfinder: **Scheffler, Ingolf, Dr.**
**Merianstrasse 14**
**D-6908 Wiesloch(DE)**
Erfinder: **Ruch, Klaus, Dr**
**Ahornweg 19**
**D-6908 Wiesloch(DE)**
Erfinder: **Jösel, Rainer, Dr.**
**Kaiserstrasse 43**
**D-7500 Karlsruhe(DE)**

(74) Vertreter: **UEXKÜLL & STOLBERG**
**Patentanwälte**
**Beselerstrasse 4**
**D-2000 Hamburg 52(DE)**

(54) **Masse-Feder-Systeme für Schallschutzzwecke.**

(57) Ein Masse-Feder-System für Schallschutzzwecke, insbesondere in Kraftfahrzeugen, besteht aus einer biegeweichen Kunststoffschwerschicht als Masse und einer weichen Schicht als Feder, welche zur Anlage an der schallabstrahlenden Fläche oder Wand dient und welche ein Gel aus 10 bis 50 Gew.% eines organischen Polymeren oder Silikonpolymeren und 50 bis 90 Gew.% eines damit jeweils verträglichen Weichmachers ist, das bei Raumtemperatur einen Elastizitätsmodul $E' \leqq 5 \times 10^5$ Pa und einen inneren Verlustfaktor $d \geqq 0,5$ aufweist.

## Fig. 1

## Masse-Feder-Systeme für Schallschutzzwecke

Es ist bekannt, die Schalldämmung bei schallabstrahlenden Wänden oder Flächen durch den Doppelwandeffekt zu verbessern. Dabei wird auf der zu dämmenden Wand, z.B. dem Karosserieblech eines Kraftfahrzeugs, im Abstand von 10 bis 30 mm eine biegeweiche Kunststoffschwerschicht (Masse) angeordnet. Der Raum zwischen Blech und Kunststoffschicht wird mit einem Faservlies oder mit Polyurethanweichschaumstoff (Feder) ausgefüllt. Solche Masse-Feder-Systeme verhindern, daß vibrierende Bauteile, beispielsweise Karosseriebleche, welche aus bestimmten Gründen nicht durch Dämpfungsbeläge entdröhnt werden können, allzu stark Luftschall abstrahlen.

In der Praxis verwendet man als Deckschicht (Masse) üblicherweise Kunststoffschwerfolien, welche aus thermoplastischen Kunststoffen wie Ethylen/Vinylacetatcopolymeren mit einem hohen Gehalt an spezifisch schweren Füllstoffen wie Bariumsulfat bestehen und demgemäß eine große Masse pro Flächeneinheit aufweisen. Aus naheliegenden Gründen ist jedoch die verwendbare Masse insbesondere in Fahrzeugen, vor allem in Personenkraftwagen, begrenzt.

Die Federschicht soll möglichst weich sein und eine hohe innere Dämpfung aufweisen. Die erzielbare Weichheit hat jedoch ihre Grenzen zunächst in der allgemeinen Charakteristik dieser Stoffe, zum anderen müssen aber auch solche Masse-Feder-Systeme eine bestimmte minimale Festigkeit aufweisen. Wenn Sie beispielsweise als Bodenverkleidung in einem Kraftfahrzeug dienen, ist eine ausreichende Trittfestigkeit unabdingbar.

Die bekannten Masse-Feder-Systeme führen in vorteilhafter Weise zu einer verbesserten Schalldämmung bei höheren Frequenzen, leiden aber unter dem Nachteil, daß im Bereich niedrigerer Frequenzen Resonanzeinbrüche stattfinden. Die Resonanzfrequenz wird durch die Weichheit der Feder und die Größe der Masse bestimmt. Unterhalb der Resonanzfrequenz wird die anregende Schallschwingung voll durchgelassen; in der Gegend der Resonanzfrequenz ergibt sich zusätzlich eine Amplitudenüberhöhung, deren Größe von der inneren Dämpfung des Masse-Feder-Systems abhängig ist. Erst deutlich oberhalb der Resonanzfrequenz erhält man die gewünschte Schallisolation. Gerade die Vibrationen von Vier-Zylinder-Viertaktmotoren von PKW's liegen in so niedrigen Frequenzbereichen (2. Motorordnung), daß die bekannten Masse-Feder-Systeme hier noch nicht voll zu befriedigen zu vermögen.

Der Erfindung liegt demgegenüber die Aufgabe zugrunde, bekannte Masse-Feder-Systeme ohne Erhöhung der Masse in ihren akustischen Eigenschaften zu verbessern. Eine wirksame schwingungstechnische Entkopplung der Masseschicht von dem schwingenden Trägermaterial (z.B. einer Karosseriewand) mit dem Ergebnis, daß nach außen kein Luftschall mehr abgestrahlt wird, soll bereits bei tieferen Frequenzen erreicht werden. Gleichzeitig soll eine Unterdrückung von Resonanzerscheinungen (Amplitudenüberhöhung) in bestimmten Frequenzbereichen und eine wirksame Körperschalldämpfung ohne zusätzliche Verwendung von Antidröhnbelägen erreicht werden.

Überraschenderweise gelingt die Lösung der genannten Aufgabe dadurch, daß bei einem Masse-Feder-System des grundsätzlich bekannten Aufbaus aus einer biegeweichen Kunststoffschwerschicht als Masse und einer weichen Schicht als Feder (welche an der schallabstrahlenden, vibrierenden Fläche oder Wand anliegt), die als Feder dienende weiche Schicht eine Mischung aus 10 bis 50 Gew.% eines organischen Polymeren oder Silikonpolymeren und 50 bis 90 Gew.% eines damit jeweils verträglichen Weichmachers ist, welche bei Raumtemperatur einen Elastizitätsmodul $E' \leq 5 \times 10^5$ Pa, vorzugsweise $E' \leq 10^5$ Pa und einen inneren Verlustfaktor $d \geq 0,5$, vorzugsweise $d \geq 0,75$ aufweist. Gegebenenfalls kann die weiche Schicht auch Füllstoffe enthalten.

Gemäß einer bevorzugten Ausführungsform kann die erfindungsgemäß zusammengesetzte weiche Schicht geschäumt sein, d.h. Porenstruktur aufweisen.

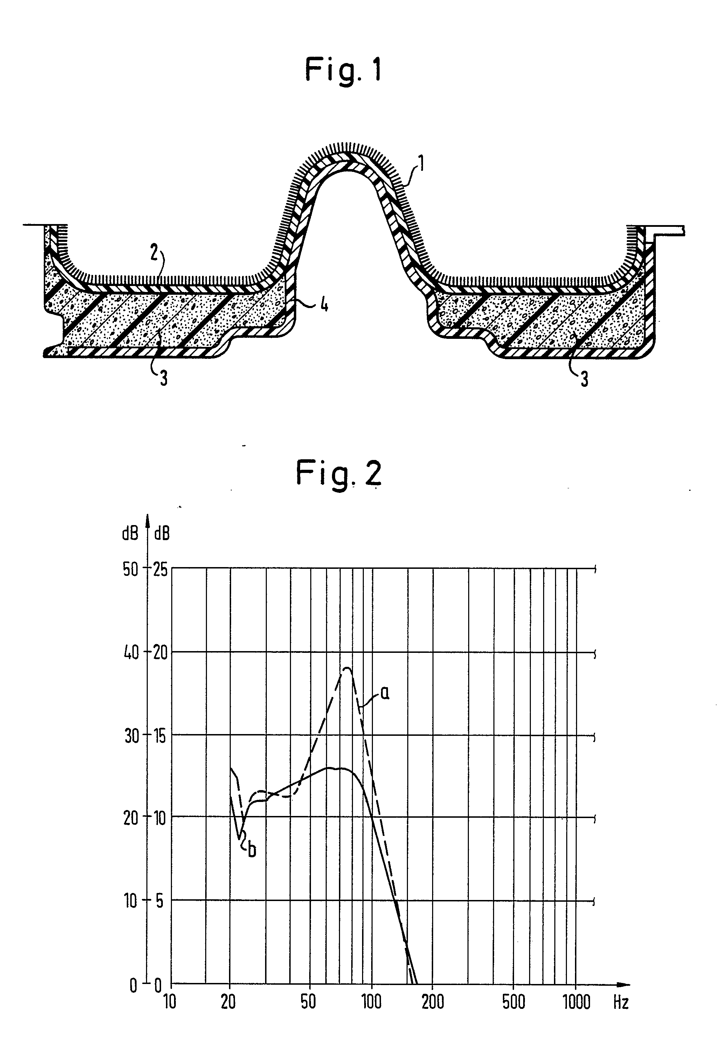

Die beiliegende Figur 1 zeigt eine bevorzugte Ausführungsform des erfindungsgemäßen Masse-Feder-Systems als Bodenbelag für ein Kraftfahrzeug im Schnitt. Als äußerste Schicht ist ein Teppichmaterial 1 vorgesehen, unter welcher sich die Kunststoffschwerschicht (Masse) 2 befindet. Die erfindungsgemäß zusammengesetzte weiche Schicht (Feder) 4 liegt beim Einbau in ein Kraftfahrzeug an der schallabstrahlenden, vibrierenden Karosseriewand, d.h. im vorliegenden Fall dem Bodenblech, formschlüssig an. Die dargestellte Ausführungsform zeigt darüberhinaus, daß die erfindungsgemäße Weichschicht sowohl allein wie auch in Kombination mit konventionellen Polyurethan-Weichschaumstoffen 3 in Masse-Feder-Systemen als Feder Verwendung finden kann. Dabei dient jedoch die zusätzlich vorhandene Weichschaumstoffmasse 3 im wesentlichen nur dem erforderlichen Konturausgleich, von ihrer akustischen Aufgabe ist sie weitgehend befreit, so daß einfachere (preisgünstigere) Materialien eingesetzt werden können. Die erfindungsgemäße Weichschicht 4 ist aufgrund ihrer Materialcharakteristik trotz ihrer hervorragenden dynamischen Weichheit auch für die Anwendung im Bodenbereich noch hinreichend trittfest.

Aufgrund ihres hohen Verlustfaktors kann die erfindungsgemäße Weichschicht auch als alleinige Feder zur effizienten Körperschalldämpfung entsprechend der Wirkungsweise von Mehrschicht-Dämpfungssystemen ("constrained layer systems") Verwendung finden.

Die Zugfestigkeit nach DIN 53571 liegt bei > 110 kPa, die Bruchdehnung nach DIN 53571 bei > 110% und der Druckverformungsrest nach DIN 53572 bei < 6%. Diese Werte bleiben nach Feuchtealterung (DBL 5305/24; 3 Zyklen) und Wärmealterung (100°C, 7 Tage) weitgehend erhalten, d.h. das Alterungsverhalten ist nicht schlechter als bei Polyurethanweichschaumstoff. Dasselbe gilt für die Beständigkeit gegenüber Bremsflüssigkeit, Schmieröl, Kraftstoffen und Reinigungsmitteln.

Die Herstellung der erfindungsgemäßen Masse-Feder-Systeme erfolgt vorzugsweise in der Weise, daß eine Kunststoffschwerfolie, welche ggf. bereits mit dem Teppichmaterial kaschiert ist, tiefgezogen und anschließend die Weichschicht durch Sprüh- oder Injektionsverfahren in einer Form auf die Rückseite aufgebracht wird. Zur Gewichtseinsparung ist es dabei u.U. auch möglich, die Weichschicht nur bereichsweise aufzubringen. AlternatiV ist es auch möglich, die Weichschicht in Form einer Einkomponentenmasse, z.B. als Plastisol oder in Form einer bei Raumtemperatur bzw. mäßig erhöhter Temperatur härtenden Zwei-Komponentenmasse auf die schallabstrahlende Fläche aufzusprühen und anschließend die Schwerschicht über dieser Weichschicht anzubringen.

Die erfindungsgemäße Weichschicht soll als wirksame Schwingungsisoliermasse im ausgehärteten Zustand bei geringer mechanischer Auslenkung (Druck oder Zug) einen sehr niedrigen Elastizitätsmodul haben. Damit die Formstabilität gewahrt bleibt, muß bei großer Auslenkung der Elastizitätsmodul dagegen ausreichend hoch sein. Diese Eigenschaften werden von erfindungsgemäß ausgewählten Polymersystemen mit ausreichend tiefer Glasübergangstemperatur und mit geringem Vernetzungsgrad erfüllt.

Erfindungsgemäß sind zum einen schwach vernetzte Polydimethylsiloxane geeignet, die aus hydroxyterminierten Oligodimethylsiloxanen (Molekulargewicht 30.000 bis 80.000) mit di- oder trifunktionellen Silan-Vernetzern vom Typ des Di-/Triacetoxyethylsilans durch Reaktion mit Feuchtigkeit hergestellt werden. Diese Systeme werden mit nicht reaktiven Silikonölen des Polydimethylsiloxantyps (Molekulargewicht 200 bis 10.000) weich gemacht. Ferner können hitzehärtende, mit Platinverbindungen katalysierte Ein-und/oder Zwei-Komponentensilikonpolymere Verwendung finden, wobei auch diese mit den nicht reaktiven Silikonölen weichgemacht werden. Der Anteil an vernetzungsfähigem Polymer einschließlich Vernetzer beträgt zwischen 15 und 40, vorzugsweise zwischen 20 und 30 Gew.%, der Anteil an Weichmacher (Silikonöl) 60 bis 85 Gew.%.

Weiterhin sind stark weichgemachte Plastisole geeignet. Das Polymer ist dabei entweder ein Polyvinylchloridhomopolymer oder ein Vinylchlorid/Vinylacetatcopolymer oder ein Copolymer von Methylmethacrylat mit anderen Methacrylsäureestern wie z.B. Butylmethacrylat, 2-Ethylhexylmethacrylat oder ein Styrolhomopolymer oder -copolymer mit Acrylnitril, Butadien oder (Meth)acrylaten. Es können auch Mischungen von PVC mit Methylmethacrylat/Butylmethacrylatcopolymeren oder Styrol(co)polymeren eingesetzt werden. Als Weichmacher finden hierbei die in der Plastisoltechnologie üblichen Phthalat-, Adipat- oder Sebacatweichmacher, Alkylsulfonsäureester oder Trialkyl(aryl)phosphate Verwendung. Der Polymerpulvergehalt beträgt dabei 10 bis 20 Gew.%, der Weichmachergehalt entsprechend 80 bis 90 Gew.%. Diese Plastisole werden in üblicher Weise durch Erhitzen in Plastigele überführt.

Erfindungsgemäß besonders geeignet sind weichgemachte Polyurethanpolymere auf der Basis von Polyetherdiolen und -triolen mit aliphatischen oder aromatischen Diisocyanaten oder verträgliche Mischungen von Polyetherdiolen und/oder -triolen mit Polyesterdiolen mit aromatischen oder aliphatischen Diisocyanaten. Typische bevorzugte Beispiele für Polyetherdiole sind Polypropylenglycole vom Molekulargewicht 2000, für Polyethertriole Polypropylenoxid/Polyethylenoxid-Copolymere vom Molekulargewicht 3000 bis 6000, die durch Addition von Propylenoxid/Ethylenoxid an Glycerin oder Trimethylolpropan erhalten werden. Besonders bevorzugte Polyesterdiole sind hydroxyterminierte Neopentylglycoladipate vom Molekulargewicht 2000. Bevorzugte Diisocyanate sind p-Tetramethylxylendiisocyanat (p-TMXDI) oder 4,4'-Diphenylmethandiisocyanat (MDI). Als Weichmacher sind Phthalatsäurediester besonders bevorzugt, z.B. Ester von überwiegend geradkettigen $C_7$-$C_{11}$-Alkoholen bzw. Alkoholgemischen. Der Polymergehalt beträgt vorzugsweise 30 bis 50 Gew.% und demgemäß der Weichmacheranteil 50 bis 70 Gew.%.

Zur weiteren Erläuterung der Erfindung sollen die nachfolgenden Beispiele dienen, auf welche die Erfindung jedoch nicht beschränkt ist. Der Verlustfaktor wurde jeweils bei Raumtemperatur und 50 bis 100 Hz mittels der Vibrometermethode (d.h. bei geringer mechanischer Auslenkung) in Anlehnung an DIN 53426 bestimmt.

Beispiel 1

3

**Feuchtigkeitshärtendes Silikongel**

Es wurde eine Mischung aus folgenden Bestandteilen hergestellt:

| | |
|---|---|
| α-ω-Dihydroxypolydimethylsiloxan (MG 80.000) | 30 Teile |
| tris-Acetoxyethylsilan | 2 Teile |
| Silikonöl (MG 5000) | 70 Teile |
| Dibutylzinndiacetat | 0,05 Teile |

Die Härtung erfolgte während zwei Tagen bei 23°C und 50% relativer Feuchtigkeit. Das erhaltene Gel wies einen Elastizitätsmodul $E' = 2 \times 10^5$ Pa und einen Verlustfaktor $d = 0,5$ auf.

Beispiel 2

**Hitzehärtendes Silikongel**

Es wurde eine Mischung aus folgenden Bestandteilen hergestellt:

| | |
|---|---|
| Silikonoligomer (Silgel 612 B Komponente A der Fa. Wacker) | 10 Teile |
| Silikonoligomer (Silgel 612 B Komponente B der Fa. Wacker) | 10 Teile |
| Silikonöl (MG 5000) | 50 Teile |

Die Mischung wurde 30 Min. lang bei 100°C gehärtet. Sie wies einen Elastizitätsmodul $E' = 10^5$ Pa und einen Verlustfaktor $d = 0,5$ auf.

Beispiel 3

**Plastisol**

Es wurde eine Mischung aus folgenden Bestandteilen hergestellt:

| | |
|---|---|
| PVC Homopolymer (K-Wert 70) | 7 Teile |
| Methylmethacrylat/Butylmethacrylat-Copolymer (MMA:BMA = 65:35; MG > 300.000) | 7 Teile |
| Di-2-ethylhexylphthalat | 86 Teile |

Dieses Plastisol wurde durch 30 Min. langes Erhitzen auf 150°C zu einem Plastigel gehärtet. Es wies einen Elastizitätsmodul $E' = 1,7 \times 10^5$ Pa und einen Verlustfaktor $d = 0,5$ auf.

Beispiel 4

**Polyurethangel**

Es wurde eine Mischung aus folgenden Bestandteilen hergestellt:

| Poly(propylenoxid/ethylenoxid)copolymer (Triol, MG 3000; Ethylenoxidanteil ca. 18%) | 28 Teile |
|---|---|
| Polypropylenglykol (Diol, MG 2000) | 21 Teile |
| TMXDI | 6 Teile |
| Di-$C_7$-$C_{11}$-alkylphthalat | 70 Teile |
| Dibutylzinndilaurat | 0,01 Teile |

Zur Härtung wurde 45 Min. lang auf 150°C erhitzt. Das gehärtete Material wies einen Elastizitätsmodul E$'$ = 1,0 x 10$^5$ und einen Verlustfaktor d = 0,76 auf.


Beispiel 5


**Polyurethangel**

Eine Mischung wurde aus folgenden Bestandteilen hergestellt:

| Poly(propylenoxid/ethylenoxid)copolymer (Triol, MG 3000, Ethylenoxidanteil ca. 18%) | 20 Teile |
|---|---|
| Poly(neopentylglycoladipat) (Diol, MG 2000) | 30 Teile |
| MDI | 7,7 Teile |
| Di-$C_7$-$C_{12}$-alkylphthalat | 60 Teile |
| Aminkatalysator (Niax A 6) | 0,35 Teile |
| Dibutylzinndilaurat | 0,01 Teile |

Es wurde 10 Min. lang auf 55°C erhitzt, um die Mischung zu einem Polyurethangel zu härten. Das Material wies einen Elastizitätsmodul E$'$ = 1 x 10$^5$ Pa und einen Verlustfaktor d = 0,75 auf.

Die beiliegende Figur 2 zeigt die Vibrometermesskurven a) für einen viskoelastischen Polyurethanschaum gemäß Stand der Technik (E$'$ = 1,5 x 10$^5$ Pa; d = o,3) und b) für ein erfindungsgemäßes Polyurethangel (E$'$ = 0,9 x 10$^5$ Pa; d = 0,8). Bei der Messung wurde jeweils eine Metallplatte von 50 x 50 mm elektromagnetisch in Schwingung versetzt. Die Frequenz wurde variiert, die Beschleunigung wurde über die Frequenz konstant gehalten (0,1 g). Eine Probe des Testmaterials von 50 x 50 mm wurde jeweils lose auf die Grundplatte aufgelegt und mit einer Deckmasse (50 g inklusive Beschleunigungsaufnehmer) versehen. Die Schwingungsamplitude der Deckmasse wurde als Funktion der Anregungsfrequenz aufgetragen.

Die Meßkurven zeigen deutlich die Überlegenheit des erfindungsgemäßen Materials in dem praktisch besonders wichtigen Bereich von 40 bis 100 Hz.


**Ansprüche**

1. Masse-Feder-System für Schallschutzzwecke, insbesondere in Kraftfahrzeugen, aus einer biegeweichen Kunststoffschwerschicht als Masse und einer weichen Schicht als Feder, welche zur Anlage an der schallabstrahlenden Fläche oder Wand dient, dadurch gekennzeichnet, daß die als Feder dienende weiche Schicht ein Gel aus 10 bis 50 Gew.% eines organischen Polymeren oder Silikonpolymeren und 50 bis 90 Gew.% eines damit jeweils verträglichen Weichmachers ist, das bei Raumtemperatur einen Elastizitätsmodul E$'$ ≤ 5 x 10$^5$ Pa und einen inneren Verlustfaktor d ≥ 0,5 aufweist.

2. Masse-Feder-System nach Anspruch 1, dadurch gekennzeichnet, daß die als Feder dienende weiche Schicht geschäumt ist.

3. Masse-Feder-System nach einem der Ansprüche 1 oder 2, dadurch gekennzeichnet, daß die als Feder dienende weiche Schicht ein Gel aus einem Polyurethanpolymeren und einem Weichmacher ist.

4. Masse-Feder-System nach Anspruch 3, dadurch gekennzeichnet, daß das Gel aus 30 bis 50 Gew.% Polyurethanpolymer und 50 bis 70 Gew.% Weichmacher besteht.

5. Masse-Feder-System nach einem der Ansprüche 1 oder 2, dadurch gekennzeichnet, daß die als Feder dienende weiche Schicht ein Plastigel aus Polyvinylchloridhomo- oder copolymeren und/oder Methylmethacrylatcopolymeren und/oder Styrolhomo- oder copolymeren und Weichmachern ist.

6. Masse-Feder-System nach Anspruch 5, dadurch gekennzeichnet, daß das Gel aus 10 bis 20 Gew.% Polymeren und 80 bis 90 Gew.% Weichmacher besteht.

7. Masse-Feder-System nach einem der Ansprüche 1 oder 2, dadurch gekennzeichnet, daß die als Feder dienende weiche Schicht ein Gel aus einem feuchtigkeits- oder hitzegehärteten Polydimethylsiloxan und einem Silikonöl als Weichmacher ist.

8. Masse-Feder-System nach Anspruch 7, dadurch gekennzeichnet, daß die Mischung aus 15 bis 40 Gew.% Polydimethylsiloxan und 60 bis 85 Gew.% Silikonöl besteht.

9. Masse-Feder-System nach einem der Ansprüche 1 bis 8, dadurch gekennzeichnet, daß zwischen der als Feder dienenden weichen Schicht und der Kunststoffschwerschicht zumindest bereichsweise ein Schaumstoff, insbesondere ein Polyurethanweichschaumstoff angeordnet ist.

10. Mehrschicht-System für Schallschutzzwecke, insbesondere zur Körperschalldämpfung und Luftschalldämmung, aus mehreren biegesteifen Schichten und mindestens einer dämpfenden weichen Zwischenschicht, dadurch gekennzeichnet, daß die Zwischenschicht ein Gel aus 10 bis 50 Gew.% eines organischen Polymeren oder Silikonpolymeren und 50 bis 90 Gew.% eines damit jeweils verträglichen Weichmachers ist, das bei Raumtemperatur einen Elastizitätsmodul $E' \leq 5 \times 10^5$ Pa und einen inneren Verlustfaktor $d \geq 0{,}5$ aufweist.

11. Mehrschicht-System nach Anspruch 10, dadurch gekennzeichnet, daß die Zwischenschicht ein Gel gemäß den Ansprüchen 2 bis 9 ist.

# Fig. 1

# Fig. 2